# EUROPÄISCHE PATENTSCHRIFT

(11) **EP 2 520 156 B1**
(45) Veröffentlichungstag und Bekanntmachung des Hinweises auf die Patenterteilung: **13.07.2016**
(21) Anmeldenummer: 12166695.2
(22) Anmeldetag: 03.05.2012
(51) Int. Cl.: A01D 57/20, A01D 61/00, A01D 78/10, A01D 75/28

(54) **Erntemaschine mit wenigstens zwei Querförderern**
Harvesting machine with at least two cross conveyors
Moissonneuse avec au moins deux convoyeurs transversaux

(30) Priorität: 03.05.2011 DE 102011100348; 31.10.2011 DE 102011117287
(43) Veröffentlichungstag der Anmeldung: 07.11.2012
(73) Patentinhaber: CLAAS Saulgau GmbH, 88348 Bad Saulgau (DE)
(72) Erfinder: Pflanze, Sascha, 14822 Brück (DE); Beck, Thomas, 72537 Mehrstetten (DE)

(56) Entgegenhaltungen:
- EP-A2- 2 281 435
- FR-A1- 2 803 483
- US-A- 2 674 082
- US-A1- 2010 223 896

## Beschreibung

Die Erfindung betrifft ein Verfahren zum Betreiben einer Erntemaschine nach dem Oberbegriff des Anspruchs 1.

### Stand der Technik

US 2,674,082 offenbart eine selbstfahrende Erntemaschine mit einer ersten und zweiten Querfördereinheit, die als Bandfördereinrichtungen ausgeführt sind und aus abgemähtem Erntegut einen Schwad bilden sowie zwischen einer Arbeits- und einer Transportstellung verstellbar sind, wobei die beiden Bandfördereinrichtungen bei Geradeausfahrt mit gleicher Geschwindigkeit angetrieben werden und bei Kurvenfahrt die kurveninnere Bandfördereinrichtung proportional zur Verlangsamung des kurveninneren Hauptrades gebremst wird.

In der EP 1 155 609 B1 wird eine derartige Mähvorrichtung beschrieben, wobei die Schwadeinrichtung mittels eines Gelenks über einen vertikal beweglichen Rahmen schwenkbar ist. Diese Druckschrift betrifft ein gezogenes Mähgerät mit eigenem Fahrwerk.

EP-A- 2 281 435 offenbart ein Verfahren zum Betreiben einer Ernte maschine.

Darüber hinaus sind beispielsweise aus der EP 1 068 791 oder der DE 10 2005 051 544 bereits verschiedene Mähmaschinen bekannt, wobei diese insbesondere als Selbstfahrer ausgebildet sind und im Mähbetrieb frontseitig angeordnete Mäheinheiten aufweisen, denen je mindestens zwei Seitenmähwerke nachgelagert sind. Die Seitenmähwerke sind z.B. mittels Teleskopauslegern von einer zusammengeklappten bzw. hochgeschwenkten Transportstellung in eine ausgeklappte bzw. heruntergeschwenkte Arbeitsstellung verstellbar.

Die Seitenmähwerke besitzen Schwadeinheiten, wobei mittels eines Schwadband abgemähtes Mähgut der Seitenmähwerke aufgenommen und zur Längsmittelebene des Fahrzeugs transportiert und im Normalbetriebsfall gemeinsam auf einem einzigen Schwad abgelegt wird.

Die Frontmähwerke umfassen meistens einfachere Querförderer bzw. Leitscheiben oder dergleichen, die dafür Sorge tragen, dass im vorgenannten Fall mit einem einzigen Schwad das abgemähte Mähgut der Frontmähwerke zwischen den Laufrädern des Selbstfahrers abgelegt wird, auf den dann in einem "normalen" bzw. ersten Arbeitsmodus die Seitenmähwerke bzw. deren Querförderer zusätzlich abgemähtes Mähgut wie Gras oder dergleichen ablegen.

Darüber hinaus sind bereits in der Landtechnik derartige Mähmaschinen auch als Anbaugeräte für Traktoren oder dergleichen bekannt, die heckseitig mit der so genannten Dreipunktaufhängung am Traktor fixiert und angehoben werden können, um ohne Laufrad auszukommen. Häufig haben derartige heckseitige Mähgeräte ein entsprechend frontseitig angeordnetes einzelnes Mähwerk, das ebenfalls mittig längs der Längsmittelebene einen Schwad zwischen den Laufrädern des Traktors generiert. Die heckseitigen beiden Mähwerke weisen wiederum jeweils einen Querförderer mit einem Transportband oder dergleichen auf, die entsprechend das Mähgut der Seitenmähwerke auf den bereits vorhandenen Mittelschwad des Frontmähwerks ablegen.

Derartige paarweise im Einsatz verwendete Mähgeräte weisen jedoch Nachteile u.a. im so genannten Vorgewende auf, das heißt ein Anheben der Mähwerke bzw. Mähgeräte in eine Zwischenstellung, die zwischen der Arbeits- und der Transportstellung angeordnet ist. Beispielsweise bei einer Überfahrt über einen bereits vorhandenen, zur Fahrtrichtung quer ausgerichteten Schwad, der insbesondere spitzwinklig überfahren werden muss, kann es bei einem nachfolgenden Mähgang zu einem nachteiligen Querversatz bzw. Verwerfen des Schwades kommen. Dieses Auseinanderwerfen des erzeugten Schwades aufgrund eines sogenannten Einzelaushubes eines der Mähwerke und/oder das Auseinanderwerfen des bereits vorhandenen Querschwades kann dazu führen, dass ein separater Arbeitsschritt mit einem Schwade, Rechen oder dergleichen notwendig wird, so dass zusätzlicher Arbeitsaufwand und zusätzliche Zeit bzw. Betriebsmittel benötigt werden, um das Erntegut beispielsweise mittels einer Pick-up-Vorrichtung möglichst vollständig aufzunehmen.

### Aufgabe und Vorteile der Erfindung

Aufgabe der vorliegenden Erfindung ist dagegen, Nachteile des Stands der Technik zu beseitigen, insbesondere selbst in besonderen Situationen Aufwand und Zeit zum Zusammenlegen bzw. Abernten von abgemähtem Erntegut zu verringern.

Diese Aufgabe wird, ausgehend von Erntemaschinen der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßes Verfahren zum Betreiben einer Erntemaschine dadurch aus, dass ein zweiter Arbeitsmodus vorgesehen ist, in dem die zweite Querfördereinheit eine zweite Fördergeschwindigkeit aufweist, wobei die zweite Fördergeschwindigkeit kleiner als die Fördergeschwindigkeit der ersten Querfördereinheit ist.

Mit Hilfe dieser erfindungsgemäßen Maßnahme wird erreicht, dass die Schwadlegung auch bei unterschiedlichsten Anforderungen bzw. Rahmenbedingungen oder Situationen in vorteilhafter Weise angepasst werden kann, so dass nahezu immer ein eindeutig und klar abgegrenzter sowie nicht verworfener Schwad generiert wird. Dies trifft in besonderem
Maß zu, bei z.B. unterschiedlich großen Erntegutmengen auf der einen Seite der ersten Querfördereinheit im Vergleich zu der anderen Seite der zweiten Querfördereinheit und/oder bei Hangfahrt quer zur Schräge/Neigung des Feldes und/oder bei
einem Einzelaushub von einem der beidseitig angeordneten Querförderer oder dergleichen. Dies führt dazu, dass auch unter derartigen besonderen Rahmenbedingungen bzw. Situation vor dem Abernten bzw. Aufladen des Erntegutes keine zusätzliche, separate Nachbearbeitung des Schwades bzw. kein zusätzlicher Aufwand für einen separaten Arbeitsschritt zum Zusammenrechen bzw. Schwaden des Ernteguts notwendig wird.

Durch die Verringerung der Fördergeschwindigkeit der einen Querfördereinheit wird nämlich erreicht, dass das quer geförderte Erntegut definiert bzw. in vorgegebener Weise auch unter besonderen Betriebsbedingungen bzw. in besonderen Arbeitssituationen als einheitlicher Schwad abgelegt werden kann. Beispielsweise kann bei einem Bandschwader die Wurfweite des quer zur Fahrtrichtung beförderten Erntegutes gemäß der Erfindung in vorteilhafter Weise angepasst bzw. eingestellt werden.

In einer besonderen Weiterbildung der Erfindung ist ein dritter Arbeitsmodus vorgesehen, in dem die erste Querfördereinheit eine dritte Fördergeschwindigkeit aufweist, wobei die dritte Fördergeschwindigkeit größer als die erste Fördergeschwindigkeit der Querfördereinheiten des ersten Arbeitsmodus ist. Das bedeutet, dass gemäß der Erfindung die zweite Querfördereinheit langsamer bzw. mit einer kleineren Fördergeschwindigkeit in vorteilhaften Betriebsmodi betrieben werden kann und gegebenenfalls gleichzeitig in einem dritten Arbeitsmodus die erste Querfördereinheit beschleunigt bzw. eine höhere Fördergeschwindigkeit aufweist, als im normalen bzw. gewöhnlichen, d.h. ersten Arbeitsmodus.

Bislang war beim Stand der Technik lediglich der erste Arbeitsmodus realisiert, wobei in allen Betriebsmodi die Fördergeschwindigkeiten der ersten und der zweiten Querfördereinheit gleich waren. Gemäß der Erfindung wird hierbei als Arbeitsmodus nicht das außer Betrieb setzen eines der oder beider Querfördereinheiten betrachtet, sondern die erfindungsgemäßen Arbeitsmodi beziehen sich auf einen Betrieb, wobei eine Fördergeschwindigkeit vorhanden ist. Ein außer Betrieb setzen stellt gemäß der Erfindung keinen Arbeitsmodus, sondern einen Ruhemodus dar.

Gemäß der Erfindung kann beispielsweise bei einer Fahrt quer zur Hangneigung bzw. quer zur Schräge des zu bearbeitenden Feldes in vorteilhafter Weise die "obere" Querfördereinheit eine geringere Fördergeschwindigkeit aufweisen, als die "untere" Querfördereinheit, so dass aufgrund der Einwirkung der Gewichtskraft bzw. bei unterschiedlicher Hangneigung/Schräge ein gleichmäßiger Schwad erzeugt werden kann.

In einer anderen Situation mit unterschiedlich stark anfallendem Erntegut kann beispielsweise bei einem besonders großen Anfall an Erntegut auf der Seite der zweiten Querfördereinheit diese mit einer im Vergleich zum normalen Betriebszustand bzw. im Vergleich zum ersten Arbeitsmodus erfindungsgemäß kleineren Fördergeschwindigkeit beaufschlagt werden. Zudem kann in vorteilhafter Weise die erste Querfördereinheit mit besonders geringer Erntegutmenge eine im Vergleich zum normalen Betriebszustand bzw. im Vergleich zum ersten Arbeitsmodus höhere/größere Fördergeschwindigkeit aufweisen. Hierdurch wird erreicht, dass die sich treffenden, jedoch unterschiedlich groß ausgebildeten Erntegutquerströme in vorteilhafter Weise in Bezug auf die hiermit verbundenen Kräfte/Energien bzw. Impulse sich im Wesentlichen ausgleichen. Das bedeutet, dass zwischen den beiden quer geförderten Erntegutmengen quasi ein Kräfte-/Energiegleichgewicht bzw. ein Impulsgleichgewicht gemäß der Erfindung realisierbar ist, um selbst bei den vielfach auftretenden besonderen Situationen beim Ernten bzw. Querfördern von Erntegut in vorteilhafter Weise das Verwerfen des zu generierenden Schwades wirkungsvoll zu verhindern.

Vorteilhafterweise verschwenkt im zweiten und/oder dritten Arbeitsmodus die erste Querfördereinheit von der Arbeits- in eine Zwischenstellung bzw. in das so genannte Vorgewende. Das heißt, dass dies die Zeitdauer bzw. Phase des Verschwenkens bzw. Anhebens darstellt. Hiermit wird in vorteilhafter Weise ermöglicht, dass beispielsweise bei einem spitzwinkligen Anfahren eines bereits auf dem Feld liegenden und quer zur Fahrtrichtung ausgerichteten Schwades zuerst bzw. lediglich ein einzelner Querförderer bzw. Bandschwader etwas angehoben wird (Einzelaushub), um den bereits auf dem Feld liegenden Schwad nicht zu verwerfen. Kurze Zeit bzw. wenige Meter später kann dann die zweite Querfördereinheit bzw. die zweite Arbeitseinheit in vorteilhafter Weise in eine entsprechende Zwischenstellung bzw. das Vorgewende verschwenken bzw. angehoben werden, um wiederum den bereits vorhandenen, auf dem Feld liegenden Schwad nicht zu verwerfen.

Es hat sich gerade beim Stand der Technik gezeigt, dass diese übliche bzw. vielfach vorkommende Situation des sog. "Einzelaushubes" zu einem nachteiligen Verwerfen des bereits vorhandenen Schwades und/oder zum Verwerfen des gerade zu erzeugenden Schwades führt, wodurch eine Nachbearbeitung des Schwades häufig notwendig wurde. Gemäß der Erfindung kann diese Nachbearbeitung selbst bei einem einseitigen Einzelaushub wirkungsvoll vermieden werden, was sowohl einen zeitlichen als auch einen wirtschaftlich großen Vorteil gegenüber dem Stand der Technik bedeutet.

Vorteilhafterweise ist ein vierter Arbeitsmodus vorgesehen, in dem die erste Querfördereinheit in der Zwischenstellung angeordnet ist und dass die zweite Querfördereinheit die zweite Fördergeschwindigkeit aufweist, wobei die erste Querfördereinheit die erste oder die dritte Fördergeschwindigkeit aufweist. Das bedeutet, dass die erste Querfördereinheit bereits in der Zwischenstellung bzw. in der so genannten Vorgewendestellung angekommen ist und sich nicht wie in der zuvor dargelegten (Einzelaushub-) Variante der Erfindung in der Phase bzw. im Zeitraum des Verschwenken befindet. Es kann durchaus von Vorteil sein, auch eine etwas längere Zeit bzw. einige Meter in einem Betriebszustand bzw. vierten Arbeitsmodus der Erntemaschine zu verharren, wobei eine Querfördereinheit im Arbeitsmodus bzw. beim Querfördern betrieben wird und die andere Querfördereinheit bzw. Arbeitseinheit sich in dieser angehobenen Zwischenstellung bzw. im Vorgewende befindet.

Vorteilhafterweise ist die zweite Fördergeschwindigkeit um wenigstens 3 % oder wenigstens 10 % oder wenigstens 15 % kleiner als die erste Fördergeschwindigkeit. Es hat sich in ersten Versuchen gezeigt, dass etwa zwischen 3 % und ca. 20 % Verringerung der zweiten Fördergeschwindigkeit gegenüber der ersten Fördergeschwindigkeit eine vorteilhafte Anpassung auch an besondere Situationen bzw. Rahmenbedingungen realisierbar ist bzw. ein vorteilhafter einheitlicher Schwad auch unter besonderen bzw. schwierigeren Bedingungen geniert werden kann.

Ein entsprechender Unterschied bzw. eine entsprechende Vergrößerung der dritten Fördergeschwindigkeit gegenüber der ersten Fördergeschwindigkeit von wenigstens 3 % oder 10 % oder 15 % bzw. innerhalb eines Bereichs zwischen etwa 3 % und ca. 20 % gegenüber der ersten Fördergeschwindigkeit ist ebenfalls bzw. zusätzlich von großem Vorteil.

Vorzugsweise ist wenigstens eine Einstelleinheit zum Einstellen der Verkleinerung und/oder der Vergrößerung der Fördergeschwindigkeiten vorgesehen. Einerseits kann die Einstellung des Maßes der Verkleinerung und/oder der Vergrößerung manuell und/oder andererseits automatisiert bzw. von einer Kontrolleinheit nahezu selbsttätig gesteuert eingestellt bzw. verändert werden. Vorzugsweise ist die Einstelleinheit in einer Fahrerkabine und/oder an einem Arbeitsplatz des Fahrers angeordnet. Hierdurch kann der Fahrer in vorteilhafter Weise vor oder während der Arbeit eine Änderung der Einstellung vornehmen, beispielsweise eine Änderung des Maßes der Verkleinerung und/oder der Vergrößerung. Beispielsweise kann dies stufenlos oder zum Beispiel in drei Stufen erfolgen, wie zum Beispiel eine Änderung der Fördergeschwindigkeit in der ersten Stufe um ca. 5 % und in der zweiten Stufe um ca. 10 % und in der dritten Stufe um ca. 20 %.

In einer vorteilhaften Variante der Erfindung kann wenigstens ein vorteilhafter Sensor vorgesehen werden, der beispielsweise die Hangneigung (in Querrichtung zur Fahrt) erfasst und hierdurch eine automatische Anpassung der Änderung der Fördergeschwindigkeit und somit sensorgesteuert vornimmt. Auch kann ein Sensor zur Erfassung eines Hindernisses und/oder eines bereits auf dem Feld angeordneten Schwades vorgesehen werden, der in vorteilhafter Weise mit einer Kontrolleinheit zusammen das Anheben einer der Querfördereinheiten z.B. in die Zwischenstellung bzw. in das Vorgewende veranlasst und zugleich eine entsprechende Anpassung der Fördergeschwindigkeiten gemäß der Erfindung in vorteilhafter Weise veranlasst bzw. steuert.

Vorzugsweise ist wenigstens eine Arbeitseinheit vorgesehen, die eine der Querfördereinheiten und ein das Erntegut mähende Mähwerk umfasst. Die Querfördereinheit ist dem Mähwerk nachgeordnet, das heiß in Fahrtrichtung betrachtet hinter dem Mähwerk zur Aufnahme des gerade abgemähten Erntegutes ausgebildet.

Beispielsweise kann die Arbeitseinheit derart ausgebildet werden, dass die Querfördereinheit, insbesondere ein Bandschwader, in einer besonderen Betriebsweise derart vertikal verstellt wird, um ein Mähen ohne Querförderung zu realisieren.

Vorzugsweise ist die Erntemaschine gemäß der Erfindung als Anbaugerät zum Anbau an ein Trägerfahrzeug ausgebildet. Hierbei kann es sich einerseits um ein gezogenes Arbeitsgerät handeln, das ein eigenes Laufrad/Fahrwerk aufweist. Das Laufrad kann beispielsweise sowohl für den Transport auf der Straße als auch zum Fahren auf dem zu bearbeitenden Feld verwendet werden. Alternativ kann auch ein Anbaugerät vorgesehen werden, dass beim Transport beispielsweise mittels der üblichen Dreipunktanhängung angehoben wird. Bei dieser Variante der Erfindung benötigt die Erntemaschine gemäß der Erfindung kein eigenes Laufrad, zumindest für den Transport.

Alternativ kann die erfindungsgemäße Erntemaschine auch als Selbstfahrer ausgebildet werden, das heißt diese weist einen eigenen Antriebsmotor sowie Antriebsräder auf.

Generell kann die erfindungsgemäße Erntemaschine nicht nur als Mähmaschine, sondern auch als andere, in der Landwirtschaft in der Ernte einsetzbare Arbeitsmaschine ausgebildet werden. Beispielsweise sind auch Bandschwader ohne Mähwerk denkbar. So können durchaus auch Schwader, insbesondere auch Kreiselschwader mit mehreren Kreiselrechen, eine erfindungsgemäße Veränderung der Fördergeschwindigkeiten der entsprechenden (rechtsseitigen oder linksseitigen) Querfördereinheiten bzw. Kreisel aufweisen.

### Ausführungsbeispiel

Ein Ausführungsbeispiel ist in der Zeichnung dargestellt und wird anhand der Figuren nachfolgend näher erläutert.

Im Einzelnen zeigen:
- Figur 1: eine selbstfahrende Mähmaschine in perspektivischer, schematischer Seitenansicht mit zwei erfindungsgemäßen Mähwerken mit zugeordneten Schwadeinheiten in Transportstellung,
- Figur la: eine selbstfahrende Mähmaschine gemäß Figur 1 in der Frontansicht,
- Figur 2a bis 2c: eine schematische Darstellung eines getragenen Anbaugeräts mit zwei erfindungsgemäßen Mähwerken und diesen zugeordneten Schwadeinheiten in drei unterschiedlichen Arbeitsstellungen,
- Figur 3: eine schematische Draufsicht der Mähmaschine gemäß Figur 2 in Arbeitsstellung und
- Figur 4: eine schematische Draufsicht der Mähmaschine gemäß Figur 3 in der Transportstellung.

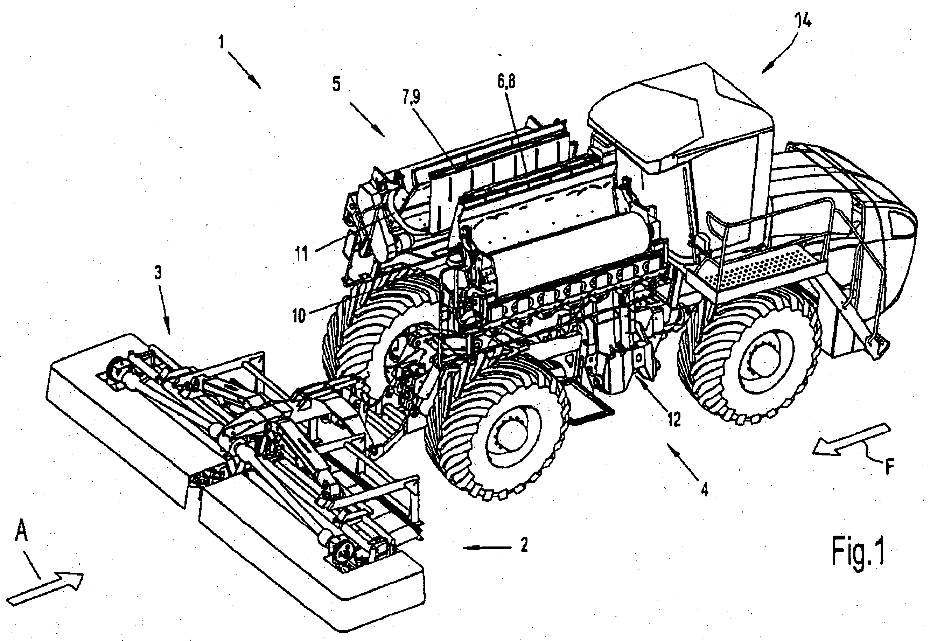

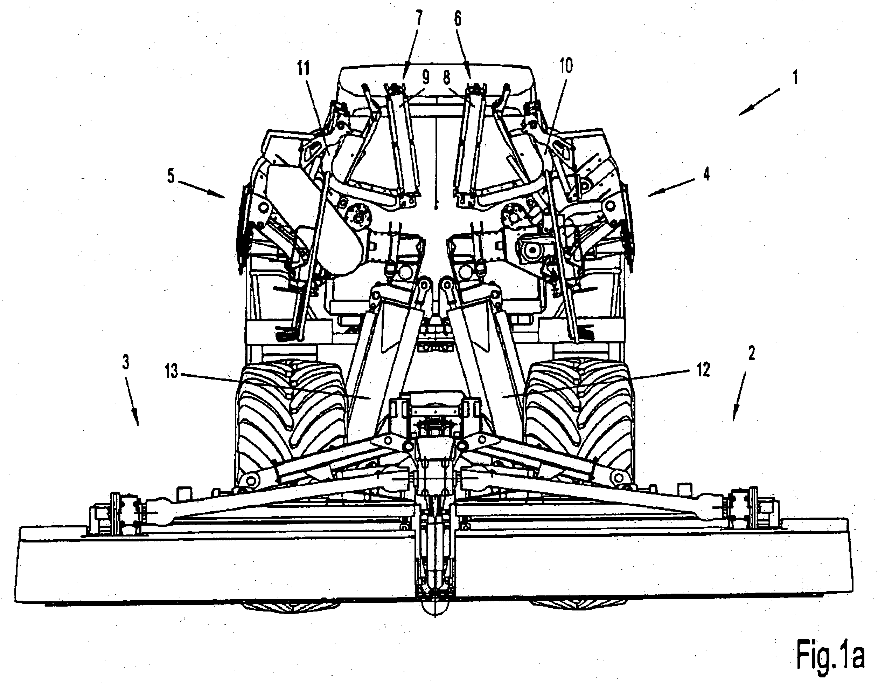

Eine selbstfahrende Mähmaschine 1 gemäß den Figuren 1 und la umfasst beispielsweise zwei ausklappbare Frontmähwerke 2, 3 sowie mindestens zwei, in der dargestellten Transportstellung eingezogene Seitenmähwerke 4, 5. Die Seitenmähwerke 4, 5 sind jeweils mit einer Schwadeinheit 6, 7 versehen. Die Schwadeinheiten 6, 7 umfassen Schwadbänder 8, 9, die über Schwenkrahmen 10, 11 an den Seitenmähwerken 4, 5 schwenkbar befestigt sind.

Die Seitenmähwerke 4, 5 sind an Teleskopauslegern 12, 13 drehbar befestigt, so dass sie in der dargestellten Transportposition längs zur Fahrtrichtung F liegen und in der Arbeitsstellung ebenso wie die dargestellten Frontmähwerke 2, 3 quer zur Fahrtrichtung angeordnet werden.

Die selbstfahrende Mähmaschine 1 fährt in Arbeitsstellung in die Mähfahrtrichtung F. In der Transportstellung fährt die Mähmaschine 1 jedoch in die entgegengerichtete Transportfahrtrichtung A, so dass während dem Transport in vorteilhafter Weise eine Fahrkabine 14 vorne angeordnet ist. Während dem Mähbetrieb ist die Fahrerkabine 14 dagegen im hinteren Bereich angeordnet, kann jedoch durch die seitlich ausgeklappten Arbeitseinheiten 4, 5, 6, 7 eine gute Sicht nach vorne zu den Frontmähwerken 2, 3 realisieren.

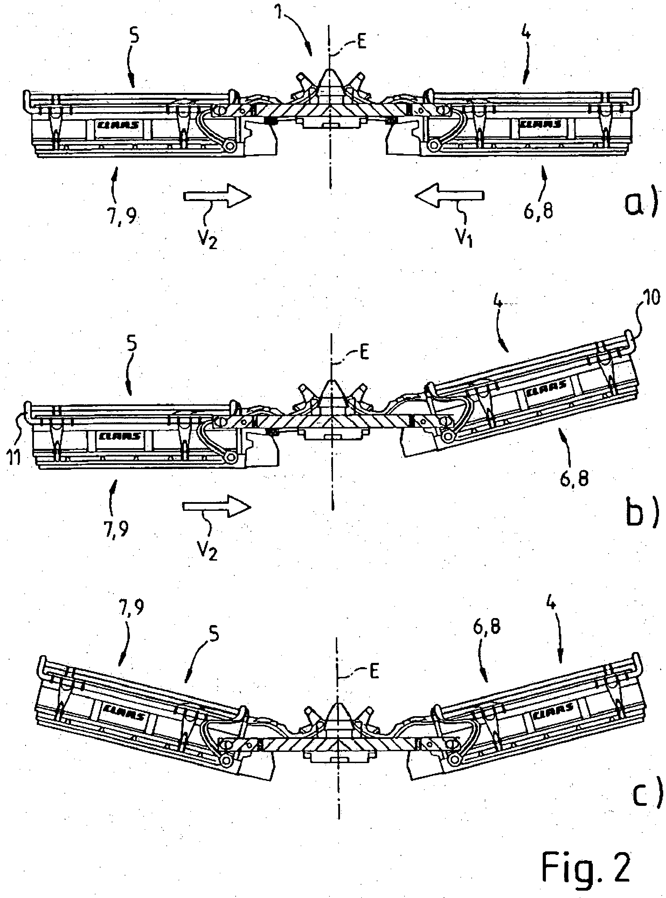

In Figur 2 ist eine zweite Ausführungsform einer Mähmaschine 1 dargestellt, die als Anbaugerät für einen Traktor oder dergleichen ausgebildet ist. Der Anbau erfolgt beispielsweise mit der standardisierten Dreipunktanhängung, so dass die Mähmaschine 1 gemäß Figur 2 beispielsweise hinten am Traktor während dem Transport in einer angehobenen Transportstellung transportiert werden kann.

In Figur 2a ist die "normale" Arbeitsstellung der beiden Seitenmähwerke 4, 5 sowie die diesen nachgeordneten bzw. zugeordneten Schwadeinheiten 6, 7 bzw. Schwadbänder 8, 9 im normalen Arbeitsbetrieb dargestellt. Das bedeutet, dass diese beispielsweise gemäß dem Stand der Technik während dem Mähen des Erntegutes die gleichen Fördergeschwindigkeiten aufweisen und somit im erfindungsgemäßen ersten Arbeitsmodus betrieben werden.

Bei Hangquerfahrt oder stark unterschiedlicher Erntegutmenge auf der linken bzw. rechten Seite können auch in dieser Arbeitsstellung gemäß Figur 2a entsprechend der Erfindung zwei unterschiedlich große Fördergeschwindigkeiten vorgesehen werden.

Figur 2b zeigt eine Arbeitsstellung, wobei die rechte Arbeitseinheit bzw. das rechte Seitenmähwerk 4 gemeinsam mit dem rechten Schwadband 8 bzw. der rechten Schwadeinheit 6 in einer Zwischenstellung angehoben ist. Gemäß der Erfindung ist dies beispielsweise der erste Querförderer 6 und die linke Arbeitseinheit bzw. das linke Mähwerk mit dem linken Schwadband 9 bzw. der linken Schwadeinheit 7 befindet sich in der Mähposition. So ist z.B. die linke Schwadeinheit 7 gemäß der Erfindung die sogenannte zweite Querfördereinheit 7,9, die beispielsweise in diesem zweiten Arbeitsmodus eine kleinere Fördergeschwindigkeit als die der ersten Schwadeinheit 6, 8 aufweist.

Mit dieser erfindungsgemäßen Maßnahme wird erreicht, dass von der zweiten bzw. linken Querfördereinheit 7,9 in Förderrichtung V2 gefördertes Erntegut weniger weit zur Längsmittelebene E geworfen wird. Dies ist von Vorteil, da die erste Schwadeinheit 6, 8 kein Erntegut bzw. nur ein kleinerer Rest des gemähten Erntegutes in Förderrichtung V1 fördert und somit ein gleichartiges Zusammentreffen bzw. -prallen von entgegengesetzt geförderten Erntegut(-strömen bzw. -mengen) nicht mehr gewährleistet wäre. Deshalb wird gemäß der Erfindung die Fördergeschwindigkeit verändert, so dass im Bereich der Längsmittelfläche E weiterhin ein einheitlicher Schwad gebildet wird. So kann auch bei unterschiedlichen Fördergutmengen/-strömen ein Kräftegleichgewicht bzw. eine Impulserhaltung beim Zusammenprallen/-treffen gewährleistet werden, um auch in dieser zum Teil häufig vorkommenden besonderen Situation ein Verwerfen des Schwades zu vermeiden.

Entsprechendes trifft auch gemäß der Erfindung für den Fall zu, dass eines der Mähwerke 4, 5 bzw. der Schwadeinheiten/Schwadbänder 6, 7, 8, 9 gar kein Erntegut befördert, so dass nur noch ein Erntegutstrom vorhanden ist. Hier kann die Wurfweite in vorteilhafter Weise gemäß der Erfindung derart eingestellt bzw. angepasst werden, dass der einseitige "Einzelwurf" in etwa dem beidseitigen Wurf bzw. Zusammenprallen der zwei entgegen gerichteten Würfe in Bezug auf die Ablagestelle/Längsmittelfläche entspricht.

Vorzugsweise wird die Fördergeschwindigkeit der ersten Schwadeinheit 6 im Moment des Anhebens bzw. beim Auslösen des Anhubs gemäß einer Ausführungsform der Erfindung etwas vergrößert bzw. beschleunigt, um bei abnehmender Erntegutmenge aufgrund des Abhebens des ersten Mähwerks 4 ein Kräfteausgleich bzw. eine Impulserhaltung mit dem zweiten Querförderer 7 zu realisieren. Dies ist von besonderem Vorteil, da in der Landwirtschaft vielfach hydraulische Antriebe für die Mäheinheiten und/oder die Querförderer 7, 8 verwendet werden, die vergleichsweise langsam ihre Arbeitsgeschwindigkeiten bzw. Fördergeschwindigkeiten reduzieren/ändern können. Somit kann die entsprechende Beschleunigung der ersten Querfördereinheit 6 dieser realisierten, kontinuierlichen Reduzierung der zweiten Fördergeschwindigkeit der zweiten Querfördereinheit 7 derart entgegenwirken, dass das Kräftegleichgewicht bzw. die Impulserhaltung zur Erzeugung eines einheitlichen, nicht verworfenen Schwades gewährleistet wird.

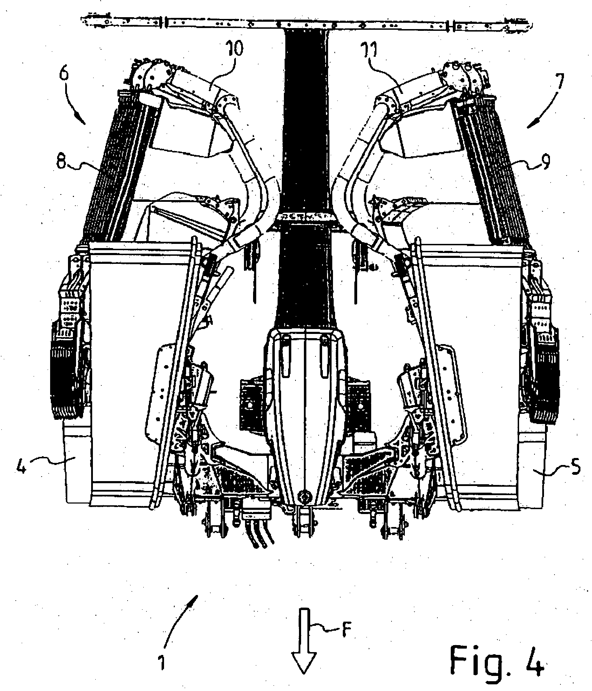

Abschließend kann in vorteilhafter Weise im Vorgewende bzw. in der Zwischenstellung nach Beendigung der Arbeitsphase auf dem Feld der Antrieb vollkommen abgestellt werden und die Arbeitseinheiten bzw. Mähwerke 4, 5 mit den entsprechenden Schwadeinheiten 6, 7 in die Transportstellung zu verschwenken. Die Transportstellung des getragenen Anbaugeräts gemäß Figur 2 ist in Figur 4 schematisch dargestellt.

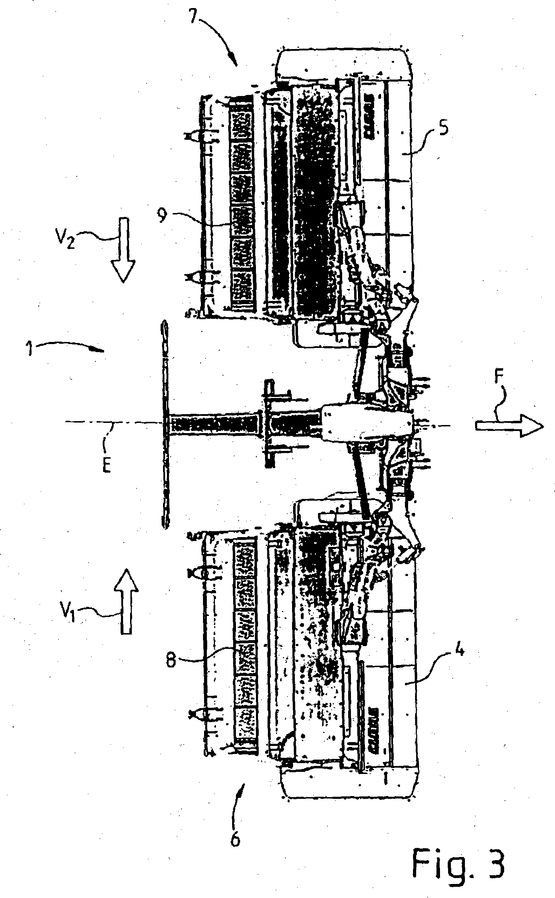

In Figur 3 ist die Arbeitsstellung der Arbeitseinheiten gemäß Figur 2a in Draufsicht schematisch dargestellt. Hier wird deutlich, dass die Schwadbänder 8, 9 in Fahrtrichtung F hinter den Seitenmähwerken 4, 5 derart angeordnet sind, dass diese unmittelbar das abgemähte Erntegut aufnehmen und in den mittigen Bereich der Längsmittelfläche entlang der Förderrichtungen V1 und V2 transportieren.

In Figur 2c ist die Stellung der beiden Seitenmähwerke 4, 5 bzw. der Schwadeinheiten 6, 7 dargestellt, wobei beide Einheiten sich im so genannten Vorgewende, das heißt sich in der angehobenen Zwischenstellung befinden.

Gemäß der Erfindung sind keine weiteren mechanischen Komponenten wie Leitbleche oder dergleichen zum Leiten bzw. Führen des Schwades auch in besonderen Betriebszuständen wie zum Beispiel beim einseitigen Aushub gemäß Figur 2b notwendig. Dementsprechend sind keine zusätzlichen Gewichte notwendig, die zwischenzeitlich bei den in der Landwirtschaft üblichen, großen bzw. schweren Arbeitseinheiten von großem Nachteil sind, da vielfach die gesetzlichen Anforderungen bezüglich des Maximalgewichtes bzw. der Achslast häufig als der limitierende Faktor bereits zu beachten ist.

### Bezugszeichenliste

- 1: Mähmaschine
- 2: Frontmähwerk
- 3: Frontmähwerk
- 4: Seitenmähwerk
- 5: Seitenmähwerk
- 6: Schwadeinheit
- 7: Schwadeinheit
- 8: Schwadband
- 9: Schwadband
- 10: Schwenkrahmen
- 11: Schwenkrahmen
- 12: Teleskopausleger
- 13: Teleskopausleger
- 14: Kabine
- A: Transportfahrtrichtung
- F: Mähfahrtrichtung
- V: Förderrichtung
- E: Längsmittelfläche

## Patentansprüche

1. Verfahren zum Betreiben einer Erntemaschine, wobei wenigstens eine erste Querfördereinheit (6-9), insbesondere ein erster Bandschwader (6-9), zum Befördern von abgemähtem Erntegut in eine erste, quer zur Fahrtrichtung (F) gerichtete Förderrichtung (V) vorgesehen ist und wobei wenigstens eine zweite Querfördereinheit (6-9), insbesondere ein zweiter Bandschwader (6-9), zum Befördern von abgemähtem Erntegut in eine zweite, quer zur Fahrtrichtung (F) gerichtete Förderrichtung (V), die der ersten Förderrichtung (V) wenigstens teilweise entgegengesetzt ist, vorgesehen ist, wobei die Querfördereinheiten (6-9) zwischen einer Arbeits- und einer Transportstellung verstellbar sind, wobei in einem ersten Arbeitsmodus beide Erntegut fördernde Querfördereinheiten (6-9) eine erste Fördergeschwindigkeit aufweisen, **dadurch gekennzeichnet, dass** ein zweiter Arbeitsmodus vorgesehen ist, in dem die zweite Querfördereinheit (6-9) eine zweite Fördergeschwindigkeit aufweist, wobei die zweite Fördergeschwindigkeit kleiner als die Fördergeschwindigkeit der ersten Querfördereinheit (6-9) ist, während die erste Querfördereinheit (6-9) von der Arbeits- in eine Zwischenstellung verschwenkt ist, welche zwischen der Arbeits- und der Transportstellung angeordnet ist, während sich die zweite Querfördereinheit (6-9) in der Arbeitsstellung befindet.

2. Verfahren nach Anspruch 1, **dadurch gekennzeichnet, dass** ein dritter Arbeitsmodus vorgesehen ist, in dem die erste Querfördereinheit (6-9) eine dritte Fördergeschwindigkeit aufweist, wobei die dritte Fördergeschwindigkeit größer als die erste Fördergeschwindigkeit der Querfördereinheiten (6-9) des ersten Arbeitsmodus ist.

3. Verfahren nach einem der vorgenannten Ansprüche, **dadurch gekennzeichnet, dass** ein vierter Arbeitsmodus vorgesehen ist, in dem die erste Querfördereinheit (6-9) in der Zwischenstellung angeordnet ist, und dass die zweite Querfördereinheit (6-9) die zweite Fördergeschwindigkeit aufweist, wobei die erste Querfördereinheit (6-9) die erste oder die dritte Fördergeschwindigkeit aufweist.

4. Verfahren nach einem der vorgenannten Ansprüche, **dadurch gekennzeichnet, dass** die zweite Fördergeschwindigkeit um wenigstens 3% kleiner als die erste Fördergeschwindigkeit ist.

5. Verfahren nach einem der vorgenannten Ansprüche, **dadurch gekennzeichnet, dass** die dritte Fördergeschwindigkeit um. wenigstens 3% größer als die erste Fördergeschwindigkeit ist.

6. Verfahren nach einem der vorgenannten Ansprüche, **dadurch gekennzeichnet, dass** wenigstens eine Einstelleinheit zum Einstellen der Verkleinerung und/oder der Vergrößerung der Fördergeschwindigkeiten vorgesehen ist.

7. Verfahren nach einem der vorgenannten Ansprüche, **dadurch gekennzeichnet, dass** eine Fahrerkabine (14) und/oder ein Arbeitsplatz des Fahrers wenigstens die Einstelleinheit umfasst.

8. Verfahren nach einem der vorgenannten Ansprüche, **dadurch gekennzeichnet, dass** eine Arbeitseinheit eine der Querfördereinheiten (6-9) und ein das Erntegut mähendes Mähwerk (4, 5) umfasst.

9. Verfahren nach einem der vorgenannten Ansprüche, **dadurch gekennzeichnet, dass** sie als Anbaugerät (1) zum Anbau an ein Trägerfahrzeug ausgebildet ist.

## Claims

1. A method of operating a harvester, wherein there is provided at least a first transverse conveyor unit (6-9), in particular a first belt swather (6-9) for conveying mowed crop material in a first conveyor direction (V) directed transversely relative to the direction of travel (F), and wherein there is provided at least a second transverse conveyor unit (6-9), in particular a second belt swather (6-9) for conveying mowed crop material in a second conveyor direction (V) which is directed transversely relative to the direction of travel (F) and which is at least partially opposite to the first conveyor direction (V), wherein the transverse conveyor units (6-9) are displaceable between a working and a transport position, wherein in a first working mode both crop material-conveying transverse conveyor units (6-9) have a first conveyor speed, **characterised in that** there is provided a second working mode in which the second transverse conveyor unit (6-9) has a second conveyor speed, wherein the second conveyor speed is less than the conveyor speed of the first transverse conveyor unit (6-9) while the first transverse conveyor unit (6-9) is pivoted from the working position into an intermediate position arranged between the working and the transport positions while the second transverse conveyor unit (6-9) is in the working position.

2. A method according to claim 1 **characterised in that** there is provided a third working mode in which the first transverse conveyor unit (6-9) has a third conveyor speed, wherein the third conveyor speed is greater than the first conveyor speed of the transverse conveyor units (6-9) of the first working mode.

3. A method according to one of the preceding claims **characterised in that** there is provided a fourth working mode in which the first transverse conveyor unit (6-9) is arranged in the intermediate position and that the second conveyor unit (6-9) has the second conveyor speed, wherein the first transverse conveyor unit (6-9) has the first or the third conveyor speed.

4. A method according to one of the preceding claims **characterised in that** the second conveyor speed is at least 3% less than the first conveyor speed.

5. A method according to one of the preceding claims **characterised in that** the third conveyor speed is at least 3% greater than the first conveyor speed.

6. A method according to one of the preceding claims **characterised in that** there is provided at least one adjusting unit for adjusting the reduction and/or the increase in the conveyor speeds.

7. A method according to one of the preceding claims **characterised in that** a driver cab (14) and/or a working position of the driver includes at least the adjusting unit.

8. A method according to one of the preceding claims **characterised in that** a working unit includes one of the transverse conveyor units (6-9) and a mowing mechanism (4, 5) for mowing the crop material.

9. A method according to one of the preceding claims **characterised in that** it is in the form of an attachment implement (1) for attachment to a carrier vehicle.

## Revendications

1. Procédé d'exploitation d'une machine de récolte, au moins une première unité de convoyage latéral (6-9), en particulier un premier andaineur à bande (6-9), étant prévu pour acheminer de la récolte fauchée dans un premier sens de convoyage (V) orienté transversalement au sens de la marche (F), et au moins une seconde unité de convoyage latéral (6-9), en particulier un second andaineur à bande (6-9), étant prévu pour acheminer de la récolte fauchée dans un second sens de convoyage (V) qui est orienté transversalement au sens de la marche (F) et qui est opposé au moins partiellement au premier sens de convoyage (V), les unités de convoyage latéral (6-9) étant réglables entre une position de travail et une position de transport, dans un premier mode de travail les deux unités de convoyage latéral (6-9) qui convoient de la récolte présentant une première vitesse de convoyage, **caractérisé en ce qu'**il est prévu un deuxième mode de travail dans lequel la seconde unité de convoyage latéral (6-9) présente une deuxième vitesse de convoyage, la deuxième vitesse de convoyage étant inférieure à la vitesse de convoyage de la première unité de convoyage latéral (6-9), tandis que la première unité de convoyage latéral (6-9) est basculée de la position de travail à une position intermédiaire qui est située entre la position de travail et la position de transport, tandis que la seconde unité de convoyage latéral (6-9) se trouve dans la position de travail.

2. Procédé selon la revendication 1, **caractérisé en ce qu'**il est prévu un troisième mode de travail dans lequel la première unité de convoyage latéral (6-9) présente une troisième vitesse de convoyage, la troisième vitesse de convoyage étant supérieure à la première vitesse de convoyage des unités de convoyage latéral (6-9) du premier mode de travail.

3. Procédé selon une des revendications précédentes, **caractérisé en ce qu'**il est prévu un quatrième mode de travail dans lequel la première unité de convoyage latéral (6-9) est située dans la position intermédiaire, et **en ce que** la seconde unité de convoyage latéral (6-9) présente la deuxième vitesse de convoyage, la première unité de convoyage latéral (6-9) présentant la première ou la troisième vitesse de convoyage.

4. Procédé selon une des revendications précédentes, **caractérisé en ce que** la deuxième vitesse de convoyage est inférieure d'au moins 3 % à la première vitesse de convoyage.

5. Procédé selon une des revendications précédentes, **caractérisé en ce que** la troisième vitesse de convoyage est supérieure d'au moins 3 % à la première vitesse de convoyage.

6. Procédé selon une des revendications précédentes, **caractérisé en ce qu'**il est prévu au moins une unité de réglage pour régler la diminution et/ou l'augmentation des vitesses de convoyage.

7. Procédé selon une des revendications précédentes, **caractérisé en ce qu'**une cabine de conduite (14) et/ou un poste de travail du conducteur comprend au moins l'unité de réglage.

8. Procédé selon une des revendications précédentes, **caractérisé en ce qu'**une unité de travail comprend une des unités de convoyage latéral (6-9) et une tête de fauchage (4-5) fauchant la récolte.

9. Procédé selon une des revendications précédentes, **caractérisé en ce qu'**elle est conformée en outil rapporté (1) apte à être monté sur un véhicule porteur.
